Europäisches Patentamt

European Patent Office

Office européen des brevets

(11) Publication number: **0 390 478**
**A1**

## EUROPEAN PATENT APPLICATION

(21) Application number: 90303217.5

(51) Int. Cl.5 **G01B 15/02**

(22) Date of filing: 27.03.90

(30) Priority: 31.03.89 JP 82958/89

(43) Date of publication of application:
**03.10.90 Bulletin 90/40**

(84) Designated Contracting States:
**DE FR GB**

(71) Applicant: **SEIKO INSTRUMENTS INC.**
**31-1, Kameido 6-chome Koto-ku**
**Tokyo 136(JP)**

(72) Inventor: **Sato, Masao**
**c/o Seiko Instruments Inc., 31-1 Kameido**
**6-chome, Koto-ku - Tokyo(JP)**

(74) Representative: **Miller, Joseph et al**
**J. MILLER & CO. Lincoln House 296-302 High**
**Holborn**
**London WC1V 7JH(GB)**

(54) X-ray apparatus for measuring film thickness.

(57) An X-ray apparatus for measuring the thickness of a film on an object (7) comprising a collimator (5) for collimating a primary X-ray (4) so as to direct an X-ray spot of sub-millimeter size onto the film on the object (7), and an optical observation system (6) for observing the induced fluorescent X-ray from the said spot characterised by a laser light source (1) for emitting a laser ray (3), and a mirror (2) for reflecting the laser ray (3) and directing the latter through the collimator (5) coaxially with the primary X-ray (4) so as to indicate the irradiation point of the X-ray spot on the object (7).

FIG. 1

X-RAY, LASER RAY

EP 0 390 478 A1

## X-RAY APPARATUS FOR MEASURING FILM THICKNESS

The present invention relates to an X-ray apparatus for measuring film thickness in which a collimated X-ray is directed onto an object or a sample to measure the thickness of a film on the sample based on the intensity of the induced fluorescent X-ray from the sample.

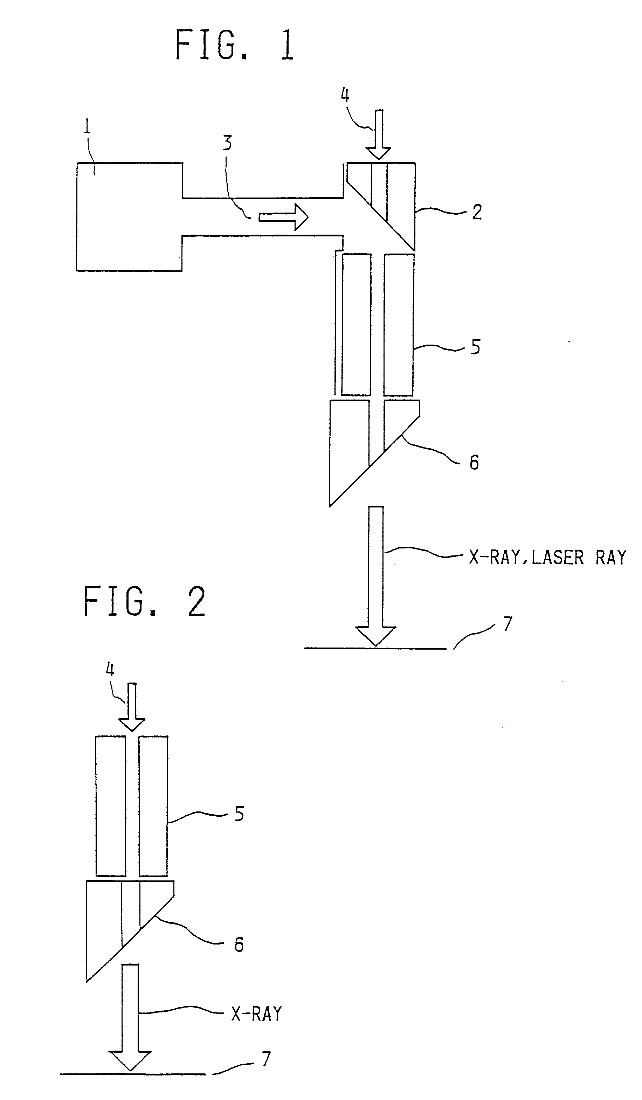

In the known apparatus shown in Figure 2, an X-ray optical system comprises a collimator 5 and a mirror 6 for use in observing a sample 7. Namely, in order to measure the film thickness of a metal coating etc. (not shown) on the sample 7, the known fluorescent X-ray film thickness measurement apparatus employs the collimator 5 to collimate a primary X-ray 4 emitted from an X-ray spherical tube (not shown) so as to produce a beam spot of a predetermined diameter and then to direct the X-ray onto the sample 7 through a mirror 6 which is used in observation of the sample.

In order to carry out this operation, adjustment must first be carried out to align the optical system of the sample observation means with the X-ray optical system, and then the film thickness measurement is carried out. In effecting such adjustment, the irradiation point of the X-ray (i.e. the measurement target point) can be recognized as the centre position of the image of the sample which is displayed on a monitoring TV (not shown) used in the sample observation means.

In the use of the known apparatus, however, a test piece must first be used for determining the optical axes of the X-ray optical system and the sample observation optical system. This involves detecting X-ray intensity, and therefore the adjustment is time-consuming.

An object of the present invention is therefore to provide an apparatus which will indicate an accurate target point of the film thickness measurement.

According to the present invention, there is therefore provided an X-ray apparatus for measuring the thickness of a film on an object comprising a collimator for collimating a primary X-ray so as to direct an X-ray spot of sub-millimeter size onto the film on the object, and an optical observation system for observing the induced fluorescent X-ray from the said spot characterised by a laser light source for emitting a laser ray, and a mirror for reflecting the laser ray and directing the latter through the collimator coaxially with the primary X-ray so as to indicate the irradiation point of the X-ray spot on the object.

Preferably the optical observation system comprises a fluorescent X-ray reflecting mirror which reflects the said fluorescent X-ray onto measuring means, the primary X-ray and the laser ray which have passed through the collimator being directed through the last-mentioned mirror and onto the said film.

Preferably a display monitor is provided for displaying an image of the surface of the film, the said image being reflected by the fluorescent X-ray reflecting mirror.

Thus in the apparatus of the present invention, the primary X-ray and the laser ray are coaxially aligned with each other by means of the first-mentioned mirror. Thus, when the laser ray is irradiated onto the sample, the bright laser spot mark accordingly indicates sample, the bright laser spot mark accordingly indicates the target point of the X-ray irradiation on the object.

The invention is illustrated, merely by way of example, in the accompanying drawings, in which:-

Figure 1 is a schematic view of an embodiment of an apparatus according to the present invention; and

Figure 2 is a schematic view of a known apparatus.

In Figure 1 there is shown an X-ray apparatus for measuring the thickness of a film (not shown) on an object or sample 7. The apparatus comprises an X-ray spherical tube (not shown) from which is emitted a primary X-ray 4 which is directed through an optical axis matching mirror 2, and thereafter is concentrated or collimated by a collimator 5 into an X-ray spot of sub-millimeter size.

A laser light source 1 emits a laser ray 3 which is directed onto the optical axis matching mirror 2. The latter reflects the laser ray 3 so as to direct it through the collimator 5. The collimated primary X-ray 4 and the reflected laser ray 3 have the same spot diameter, and they are passed coaxially and concurrently through a sample observation or fluorescent X-ray reflecting mirror 6 to thereby irradiate the film (not shown) on the sample 7. As a result, a bright laser spot mark is indicated on the surface of the sample 7, and the primary X-ray spot, whose position can be easily recognised by the bright laser spot mark, produces an induced fluorescent X-ray, the intensity of which is detected so as to measure the thickness of the film on the sample. For this purpose, the induced fluorescent X-ray is reflected by the mirror 6 onto fluorescent X-ray measuring means (not shown).

The image of the surface of the film is always displayed on a display monitor or monitoring TV (not optical system and a CCD or charge-coupled device camera (not shown), and the irradiation point of the X-ray is also indicated by the laser spot mark. The collimator 5 can be replaced by another collimator to change the X-ray spot size without disturbing the assembly of the optical axis matching mirror 2 and the laser light source 1. Further, a check on the collimator spot size can easily be carried out.

Thus in the case of the present invention, the primary X-ray and the laser ray are aligned coaxially with each other, thereby substantially simplifying the positioning of the film thickness measurement point and permitting checking of the spot size of the X-ray irradiation to be easily and quickly carried out.

## Claims

1. An X-ray apparatus for measuring the thickness of a film on an object (7) comprising a collimator (5) for collimating a primary X-ray (4) so as to direct an X-ray spot of sub-millimeter size onto the film on the object (7), and an optical observation system (6) for observing the induced fluorescent X-ray from the said spot characterised by a laser light source (1) for emitting a laser ray (3), and a mirror (2) for reflecting the laser ray (3) and directing the latter through the collimator (5) coaxially with the primary X-ray (4) so as to indicate the irradiation point of the X-ray spot on the object (7).

2. Apparatus as claimed in claim 1 characterised in that the optical observation system comprises a fluorescent X-ray reflecting mirror (6) which reflects the said fluorescent X-ray onto measuring means, the primary X-ray (4) and the laser ray (3) which have passed through the collimator (5) being directed through the last-mentioned mirror (6) and onto the said film.

3. Apparatus as claimed in claim 2 characterised in that a display monitor is provided for displaying an image of the surface of the film, the said image being reflected by the fluorescent X-ray reflecting mirror.

4. An apparatus for irradiating an X-ray (4) onto an objective sample (7) of measurement to measure a thickness of a film on the sample (7) based on an induced fluorescent X-ray; the apparatus comprising: a collimator (5) for collimating a primary X-ray (4) to form an X-ray spot having a size of sub-millimeter order; an observation optical system including a mirror (6) for observing a sample of measurement; and optical axis matching means comprised of a laser light source (1) for emitting a laser ray, and an optical axis matching mirror (2) disposed in upstream of the collimator (5) for reflecting and directing the laser ray (3) coaxially with the primary X-ray (4) toward the sample (7) so as to indicate irradiation point and size of the X-ray spot on the sample (7).

# FIG. 1

X-RAY,LASER RAY

# FIG. 2

X-RAY

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-2 112 518 (K.K. DAINI SEIKOSHA) * abstract; page 1, line 67 - page 2, line 98; figures 6,16 * | 1,4 | G 01 B 15/02 |
| Y | US-A-4 521 905 (Y. HOSOKAWA) * abstract; column 2, line 20 - column 3, line 22; figure 3 * | 1,4 | |
| A | GB-A-2 203 236 (HELMUT FISCHER ELEKTRONIK UND MESSTECHNIK AG) * page 10, lines 18-26; figure 1 * | 3 | |

TECHNICAL FIELDS
SEARCHED (Int. Cl.5)

G 01 B
G 01 N

The present search report has been drawn up for all claims

| Place of search | Date of completion of the search | Examiner |
|---|---|---|
| BERLIN | 03-07-1990 | VORROPOULOS G |